(19)

Europäisches
Patentamt
European
Patent Office
Office européen
des brevets

(11) **EP 4 703 973 A1**

(12) **EUROPEAN PATENT APPLICATION**

(43) Date of publication:
**04.03.2026 Bulletin 2026/10**

(21) Application number: **25184358.7**

(22) Date of filing: **23.06.2025**

(51) International Patent Classification (IPC):
*G06N 3/082* (2023.01)  *G06N 3/086* (2023.01)
*G06N 3/0985* (2023.01)

(52) Cooperative Patent Classification (CPC):
**G06N 3/082; G06N 3/086; G06N 3/0985**

(84) Designated Contracting States:
**AL AT BE BG CH CY CZ DE DK EE ES FI FR GB
GR HR HU IE IS IT LI LT LU LV MC ME MK MT NL
NO PL PT RO RS SE SI SK SM TR**
Designated Extension States:
**BA**
Designated Validation States:
**GE KH LA MA MD TN**

(30) Priority: **30.08.2024 IN 202421065793**

(71) Applicant: **Tata Consultancy Services Limited
Maharashtra (IN)**

(72) Inventors:
• **DEY, SWARNAVA**
 **700160 Kolkata (IN)**
• **DASGUPTA, SOMA**
 **700160 Kolkata (IN)**

(74) Representative: **Goddar, Heinz J.**
 **Boehmert & Boehmert
 Anwaltspartnerschaft mbB
 Pettenkoferstrasse 22
 80336 München (DE)**

(54) **METHOD AND SYSTEM FOR TWO STAGE MODEL TRAINING TO GENERATE A CLASS FOCUSED SEGMENTATION MODEL**

(57)    Existing segmentation models have the disadvantage that they cannot be deployed on edge devices as they are not compact and require large space. Embodiments disclosed herein provide a method and system for generating a class focused segmentation model using a two stage model training approach, which enables generation of a compact, task specific model. Using a first stage of training, a Machine Learning (ML) segmentation model that is trained on a master training dataset is generated. Further, in a second stage of training, a fine-tuned task specific segmentation model is generated, which can be used for task specific class segmentation. The fine-tuned task specific segmentation model being task specific and in turn compact, can be used edge device deployment and such applications.

performing, via one or more hardware processors, a first stage training to create N candidate models and associated first fitness scores — 202

selecting, via the one or more hardware processors, one candidate model from among the N candidate models, based on the first fitness score, wherein the selected candidate model is a multi-class segmentation model forming a master ML segmentation model — 204

receiving a set of task-specific datasets, via the one or more hardware processors, wherein the task-specific datasets comprise a pre-defined number of samples for training one of a single class segmentation problem and a few-class segmentation problem — 206

performing, for each of the task-specific datasets, via the one or more hardware processors, a second stage training, to create N candidate models and associated second fitness scores — 208

selecting, via the one or more hardware processors, one candidate model from among the N candidate models, based on the second fitness score, wherein the selected candidate model is a few class focused compact model, forming a class focused segmentation model — 210

fine-tuning, via the one or more hardware processors, the class focused segmentation model to the set of task-specific datasets, to generate a fine-tuned task specific segmentation model — 212

200

FIG. 2

EP 4 703 973 A1

**Description**

CROSS-REFERENCE TO RELATED APPLICATIONS AND PRIORITY

The present application claims priority from Indian provisional application no. 202421065793, filed on August 30, 2024.

TECHNICAL FIELD

The disclosure herein generally relates to model training, and, more particularly, to a method and system for two stage model training approach to generate a class focused segmentation model.

BACKGROUND

Image segmentation is an important problem in the context of many applications such as precision agriculture. In the precision agriculture field for example, major tasks such as automated identification and removal of weeds, precise application of fertilizers and herbicides on different species of crops and weeds, segregating diseased crops, automated harvesting, etc., require accurate segmentation. The grand vision of precision agriculture includes running these sensing and actuation tasks directly on a device and closing the control loop in real time.

In general, image segmentation is difficult due to the presence of intricate backgrounds, diverse objects, and noise. Although some of the existing models have indicated that it is possible to segment anything without explicit retraining, using such models on edge devices is not possible due to their large number of parameters, resource requirements, and dependency on Internet-based APIs.

Consequently, the requirement for compact and efficient models for on-device image segmentation remains a significant challenge. The other challenge stems from the extreme diversity in domains such as precision agriculture. Agricultural farms often cultivate different varieties of crops in different seasons. The vegetation also varies across geographical areas. Grabbing training data from each and every site and building models for those is a non-scalable process. Waiting for sufficient training data for each deployment delays the time to market and running existing AutoML tools with too little training data results in failed search, and generates poor quality, overfitted models. Moreover, these models must also conform to the platform constraints of a deployment. Whether it is deployed on a drone for high-level survey or a ground tractor for automatically spraying fertilizer, determines the accuracy needed and parameter limits.

SUMMARY

Embodiments of the present disclosure present technological improvements as solutions to one or more of the above-mentioned technical problems recognized by the inventors in conventional systems. For example, in one embodiment, a processor implemented method is provided. The method includes: performing, via one or more hardware processors, a first stage training, comprising, iteratively performing, till a search converges: receiving a master dataset comprising a plurality of samples on a plurality of classes associated with a test domain, wherein the master dataset is targeted to segment a master set of classes; dividing the master dataset into a first testing dataset and a first training dataset; receiving a first search space with a set of hyperparameters associated with the test domain, using the first training dataset; creating a pre-defined number (N) of candidate models for the received first search space, by performing a AutoML specific search in the received first search space; training and evaluating each of the N candidate models using the first training dataset for a first pre-defined number of epochs; calculating a first fitness score for each of the N candidate models using a multi-objective fitness function represented as $p = \alpha . mIoU + \gamma . \frac{1}{P}$, where, $\alpha$ and $\gamma$ are linear interpolation coefficients that assign weightage to each objective of a plurality of objectives forming the multi-objective fitness function, and wherein the first fitness score indicates a segmentation accuracy and number of parameters of the N candidate models; selecting, via the one or more hardware processors, one candidate model from among the N candidate models, based on the first fitness score, wherein the selected candidate model is a multi-class segmentation model forming a master ML segmentation model; receiving a set of task-specific datasets, via the one or more hardware processors, wherein the task-specific datasets comprise a pre-defined number of samples for training one of a single class segmentation problem and a few-class segmentation problem; performing, for each of the task-specific datasets, via the one or more hardware processors, a second stage training, comprising, iteratively performing, till a search converges: receiving the master dataset; dividing the received master dataset into a second testing dataset and a second training dataset; receiving a selection on one or more focus classes, wherein each of the one or more focus classes is a subset of the master set of classes; receiving a second search space with a plurality of the set of hyperparameters used in the master ML segmentation model, wherein the second search space is a subset of the first search space; creating the pre-defined number (N) of candidate models for the second search space, by performing the AutoML specific search in the received second search space; training and evaluating each of the N candidate models using the second training dataset for a second pre-defined number of epochs for segmenting the one or more focus classes; and calculating a second fitness score for each of the N candidate models using a second multi-objective fitness function represented as,

$$p = \alpha \cdot mIoU + (\beta_1 \cdot tIoU_1 + \beta_2 \cdot tIoU_2 + \cdots \cdot + \beta_m \cdot tIoU_m) + \gamma \cdot \frac{1}{P}$$

, where, $\alpha$, $\beta$, and $\gamma$ are the linear interpolation coefficients that assign weightage to each objective of a plurality of objectives forming the second multi-objective fitness function; selecting, via the one or more hardware processors, one candidate model from among the N candidate models, based on the second fitness score, wherein the selected candidate model is a few class focused compact model, forming a class focused segmentation model; and fine-tuning, via the one or more hardware processors, the class focused segmentation model to the set of task-specific datasets, to generate a fine-tuned task specific segmentation model.

In an embodiment of the method, the fine-tuned task specific segmentation model is used for class segmentation of a task specific data set from at least one of the first testing dataset and the second testing dataset.

In another embodiment, a system is provided. The system includes one or more hardware processors, a communication interface, and a memory storing a plurality of instructions. The plurality of instructions cause the one or more hardware processors to: perform a first stage training, comprising, iteratively performing, till a search converges: receive a master dataset comprising a plurality of samples on a plurality of classes associated with a test domain, wherein the master dataset is targeted to segment a master set of classes; divide the master dataset into a first testing dataset and a first training dataset; receive a first search space with a set of hyperparameters associated with the test domain, using the first training dataset; create a pre-defined number (N) of candidate models for the received first search space, by performing a AutoML specific search in the received first search space; train and evaluating each of the N candidate models using the first training dataset for a first pre-defined number of epochs; calculate a first fitness score for each of the N candidate models using a multi-objective fitness function represented as $p = \alpha \cdot mIoU + \gamma \cdot \frac{1}{P}$, where, $\alpha$ and $\gamma$ are linear interpolation coefficients that assign weightage to each objective of a plurality of objectives forming the multi-objective fitness function, wherein the first fitness score indicates a segmentation accuracy and number of parameters of the N candidate models; selecting, via the one or more hardware processors, one candidate model from among the N candidate models, based on the first fitness score, wherein the selected candidate model is a multi-class segmentation model forming a master ML segmentation model; receiving a set of task-specific datasets, via the one or more hardware processors, wherein the task-specific datasets comprise a pre-defined number of samples for training one of a single class segmentation problem and a few-class segmentation problem; performing, for each of the task-specific datasets, via the one or more hardware processors, a second stage training, comprising, iteratively performing, till a search converges: receiving the master dataset; dividing the received master dataset into a second testing dataset and a second training dataset; receiving a selection on one or more focus classes, wherein each of the one or more focus classes is a subset of the master set of classes; receiving a second search space with a plurality of the set of hyperparameters used in the master ML segmentation model, wherein the second search space is a subset of the first search space; creating the pre-defined number (N) of candidate models for the second search space, by performing the AutoML specific search in the received second search space; training and evaluating each of the N candidate models using the second training dataset for a second pre-defined number of epochs for segmenting the one or more focus classes; and calculating a second fitness score for each of the N candidate models using a second multi-objective fitness function represented as,

$$p = \alpha \cdot mIoU + (\beta_1 \cdot tIoU_1 + \beta_2 \cdot tIoU_2 + \cdots \cdot + \beta_m \cdot tIoU_m) + \gamma \cdot \frac{1}{P}$$

where, $\alpha$, $\beta$, and $\gamma$ are the linear interpolation coefficients that assign weightage to each objective of a plurality of objectives forming the second multi-objective fitness function; select one candidate model from among the N candidate models, based on the second fitness score, wherein the selected candidate model is a few class focused compact model, forming a class focused segmentation model; and fine-tune the class focused segmentation model to the set of task-specific datasets, to generate a fine-tuned task specific segmentation model.

In an embodiment of the system, the fine-tuned task specific segmentation model is used for class segmentation of a task specific data set from at least one of the first testing dataset and the second testing dataset.

In yet another aspect, a non-transitory computer readable medium is provided. The non-transitory computer readable medium includes a plurality of instructions, which cause one or more hardware processors to: perform a first stage training, comprising, iteratively performing, till a search converges: receive a master dataset comprising a plurality of samples on a plurality of classes associated with a test domain, wherein the master dataset is targeted to segment a master set of classes; divide the master dataset into a first testing dataset and a first training dataset; receive a first search space with a set of hyperparameters associated with the test domain, using the first training dataset; create a pre-defined number (N) of candidate models for the received first search space, by performing a AutoML specific search in the received first search space; train and evaluating each of the N candidate models using the first training dataset for a first pre-defined number of epochs; calculate a first fitness score for each of the N candidate models using a multi-objective fitness function represented as $p = \alpha \cdot mIoU + \gamma \cdot \frac{1}{P}$, where, $\alpha$ and $\gamma$ are linear interpolation coefficients that assign weightage to each objective of a plurality of objectives forming the multi-objective fitness function, wherein the first fitness score indicates a segmentation accuracy and number of parameters of the N candidate models; selecting, via the one or more hardware processors, one candidate model from among the N candidate models, based on the first fitness score, wherein the selected candidate model is a multi-class segmentation model forming a master ML segmentation model; receiving a set of task-specific datasets, via the one or more hardware processors, wherein the task-specific datasets comprise a pre-defined number of samples for training one of a single class segmentation problem and a few-class segmentation problem; performing, for each of the task-specific datasets, via the one or more hardware processors, a second stage training, comprising, iteratively performing, till a search converges: receiving the master dataset; dividing the received master dataset into a second testing dataset and a second training dataset; receiving a selection on one or more focus classes, wherein each of the one or more focus classes is a subset of the master set of classes; receiving a second search space with a plurality of the set of hyperparameters used in the master ML segmentation model, wherein the second search space is a subset of the first search space; creating the pre-defined number (N) of candidate models for the second search space, by performing the AutoML specific search in the received second search space; training and evaluating each of the N candidate models using the second training dataset for a second pre-defined number of epochs for segmenting the one or more focus classes; and calculating a second fitness score for each of the N candidate models using a second multi-objective fitness function represented as,

$$p = \alpha \cdot mIoU + (\beta_1 \cdot tIoU_1 + \beta_2 \cdot tIoU_2 + \cdots \ldots + \beta_m \cdot tIoU_m) + \gamma \cdot \frac{1}{P}$$

where, $\alpha$, $\beta$, and $\gamma$ are the linear interpolation coefficients that assign weightage to each objective of a plurality of objectives forming the second multi-objective fitness function; select one candidate model from among the N candidate models, based on the second fitness score, wherein the selected candidate model is a few class focused compact model, forming a class focused segmentation model; and fine-tune the class focused segmentation model to the set of task-specific datasets, to generate a fine-tuned task specific segmentation model.

In an embodiment of the non-transitory computer readable medium, the fine-tuned task specific segmentation model is used for class segmentation of a task specific data set from at least one of the first testing dataset and the second testing dataset.

It is to be understood that both the foregoing general description and the following detailed description are exemplary and explanatory only and are not restrictive of the invention, as claimed.

BRIEF DESCRIPTION OF THE DRAWINGS

The accompanying drawings, which are incorporated in and constitute a part of this disclosure, illustrate exemplary embodiments and, together with the description, serve to explain the disclosed principles:

> FIG. 1 illustrates an exemplary system for generating a class focused segmentation model, according to some embodiments of the present disclosure.
> FIG. 2 is a flow diagram depicting steps involved in the process of generating the class focused segmentation model, by the system of FIG. 1, according to some embodiments of the present disclosure.
> FIG. 3 is a flow diagram depicting steps involved in the process of a first stage training in the process of generating the class focused segmentation model, by the system of FIG. 1, according to some embodiments of the present disclosure.
> FIGS. 4A and 4B are flow diagrams depicting steps involved in the process of a second stage training in the process of generating the class focused segmentation model, by the system of FIG. 1, according to some embodiments of the present disclosure.

DETAILED DESCRIPTION OF EMBODIMENTS

Exemplary embodiments are described with reference to the accompanying drawings. In the figures, the left-most digit(s) of a reference number identifies the figure in which the reference number first appears. Wherever convenient, the same reference numbers are used throughout the drawings to refer to the same or like parts. While examples and features of disclosed principles are described herein, modifications, adaptations, and other implementations are possible without departing from the scope of the disclosed embodiments.

The requirement for compact and efficient models for on-device image segmentation remains a significant challenge. Another challenge stems from the extreme diversity in domains such as precision agriculture. Agricultural farms often cultivate different varieties of crops in different seasons. The vegetation also varies across geographical areas. Grabbing training data from each and every site and building models for those is a non-scalable process. Waiting for sufficient training data for each deployment delays the time to market and running existing AutoML tools with too little training data results in failed search, and generates poor quality, overfitted models. Moreover, these models must also conform to the platform constraints of a deployment. Whether it is deployed on a drone for high-level survey or a ground tractor for automatically spraying fertilizer, determines the accuracy needed and parameter limits.

In order to address these challenges, embodiments disclosed herein provide a method and system for generating a class focused segmentation model using a two stage model training approach. In this approach, in a first stage training a master ML segmentation model that is trained on a master dataset is generated. Further, in a second stage training of the two stage model training approach, the class focused segmentation model is generated by using a reduced (focused) search space, and a set of hyperparameters used in the master ML segmentation model, along with other parameters. The class focused segmentation model is then fine-tuned to a set of task-specific datasets, to generate a fine-tuned task specific segmentation model, which maybe further used for class segmentation of one or more testing datasets. By Using this approach 1) An accurate Deep Neural Network can be trained for segmentation with a limited amount of task-specific data. State of the art deep learning training methods would require a large dataset to learn the good low level features and avoid overfitting a small task specific data. With our approach, the model already learn low level features and representation from the master dataset but still emphasize on specific classes in task specific dataset. Thus it can be fine tuned to task specific dataset faster and generate more accurate model although the task specific data is small in amount. 2) the model is compact because the fitness function uses weights to restricts the AutoML search to find hyperparameters that generates smaller model but also uses weights to ensure that the target classes for the final task specific segmentation always perform well. The state of the art approaches cannot ensure both these together.

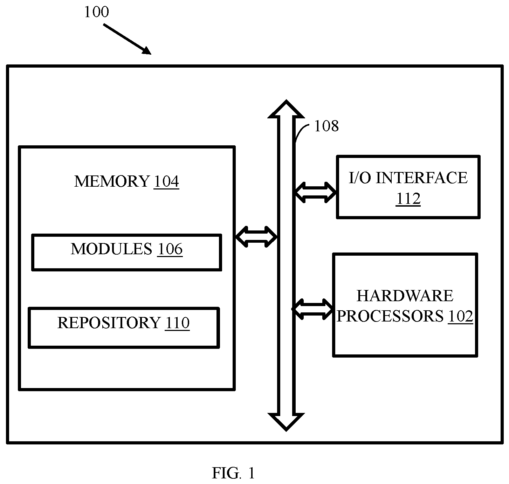

Referring now to the drawings, and more particularly to FIG. 1 through FIG. 4B, where similar reference characters denote corresponding features consistently throughout the figures, there are shown preferred embodiments and these embodiments are described in the context of the following exemplary system and/or method.

FIG. 1 illustrates an exemplary system 100 for generating a class focused segmentation model, according to some embodiments of the present disclosure.

The system 100 includes or is otherwise in communication with hardware processors 102, at least one memory such as a memory 104, an I/O interface 112. The hardware processors 102, memory 104, and the Input /Output (I/O) interface 112 may be coupled by a system bus such as a system bus 108 or a similar mechanism. In an embodiment, the hardware processors 102 can be one or more hardware processors.

The I/O interface 112 may include a variety of software and hardware interfaces, for example, a web interface, a graphical user interface, and the like. The I/O interface 112 may include a variety of software and hardware interfaces, for example, interfaces for peripheral device(s), such as a keyboard, a mouse, an external memory, a printer and the like. Further, the I/O interface 112 may enable the system 100 to communicate with other devices, such as web servers, and external databases.

The I/O interface 112 can facilitate multiple communications within a wide variety of networks and protocol types, including wired networks, for example, local area network (LAN), cable, etc., and wireless networks, such as Wireless LAN (WLAN), cellular, or satellite. For the purpose, the I/O interface 112 may include one or more ports for connecting several computing systems with one another or to another server computer. The I/O interface 112 may include one or more ports for connecting several devices to one another or to another server.

The one or more hardware processors 102 may be implemented as one or more microprocessors, microcomputers, microcontrollers, digital signal processors, central processing units, node machines, logic circuitries, and/or any devices that manipulate signals based on operational instructions. Among other capabilities, the one or more hardware processors 102 are configured to fetch and execute computer-readable instructions stored in the memory 104.

The memory 104 may include any computer-readable medium known in the art including, for example, volatile memory, such as static random-access memory (SRAM) and dynamic random-access memory (DRAM), and/or non-volatile memory, such as read only memory (ROM), erasable programmable ROM, flash memories, hard disks, optical disks, and magnetic tapes. In an embodiment, the memory 104 includes a plurality of modules 106.

The plurality of modules 106 include programs or coded instructions that supplement applications or functions performed by the system 100 for executing different steps involved in the two stage training process for generating the class focused segmentation model, and in turn the fine-tuned task specific segmentation model, being performed by the system of FIG. 1. The plurality of modules 106, amongst other things, can include routines, programs, objects, components, and data structures, which performs particular tasks or implement particular abstract data types. The plurality of modules 106 may also be used as, signal processor(s), node machine(s), logic circuitries, and/or any other device or component that manipulates signals based on operational instructions. Further, the plurality of modules 106 can be used by hardware, by computer-readable instructions executed by the one or more hardware processors 102, or by a combination thereof. The plurality of modules 106 can include various sub-modules (not shown). The plurality of modules 106 may include computer-readable instructions that supplement applications or functions performed by the system 100 for the two stage training process for generating the class focused segmentation model, and in turn the fine-tuned task specific segmentation model.

The data repository (or repository) 110 may include a plurality of abstracted pieces of code for refinement and data that is processed, received, or generated as a result of the execution of the plurality of modules in the module(s) 106.

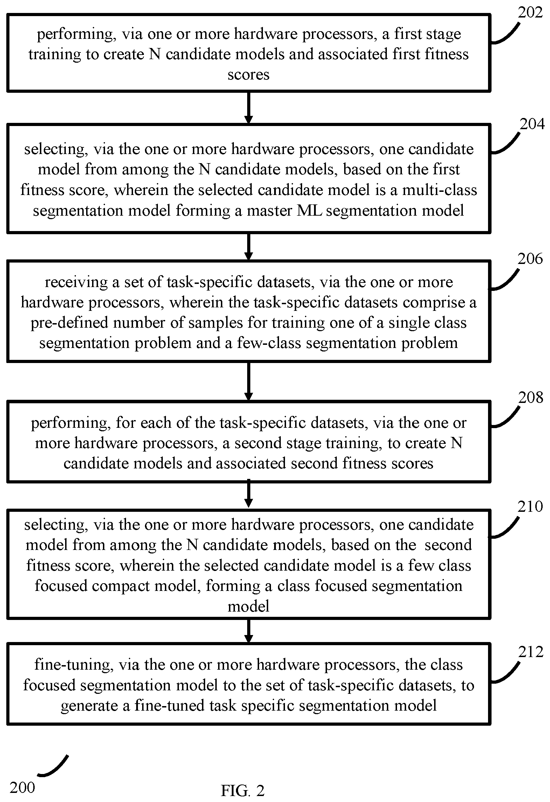

Although the data repository 110 is shown internal to the system 100, it will be noted that, in alternate embodiments, the data repository 110 can also be implemented external to the system 100, where the data repository 110 may be stored within a database (repository 110) communicatively coupled to the system 100. The data contained within such external database may be periodically updated. For example, new data may be added into the database (not shown in FIG. 1) and/or existing data may be modified and/or non-useful data may be deleted from the database. In one example, the data may be stored in an external system, such as a Lightweight Directory Access Protocol (LDAP) directory and a Relational Database Management System (RDBMS). Functions of the components of the system 100 are now explained with reference to the flow diagrams in FIG. 2 through FIG. 4B.

FIG. 2 is a flow diagram depicting steps involved in the process of generating the class focused segmentation model, by the system of FIG. 1, according to some embodiments of the present disclosure.

In an embodiment, the system 100 comprises one or more data storage devices or the memory 104 operatively coupled to the processor(s) 102 and is configured to store instructions for execution of steps of a method 200 in FIG. 2, by the processor(s) or one or more hardware processors 102. The steps of the method 200 of the present disclosure will now be explained with reference to the components or blocks of the system 100 as depicted in FIG. 1, and the steps of flow diagram as depicted in FIGS. 2. Although process steps, method steps, techniques or the like may be described in a sequential order, such processes, methods, and techniques may be configured to work in alternate orders. In other words, any sequence or order of steps that may be described does not necessarily indicate a requirement that the steps be performed in that order. The steps of processes described herein may be performed in any order practical. Further, some steps may be performed simultaneously.

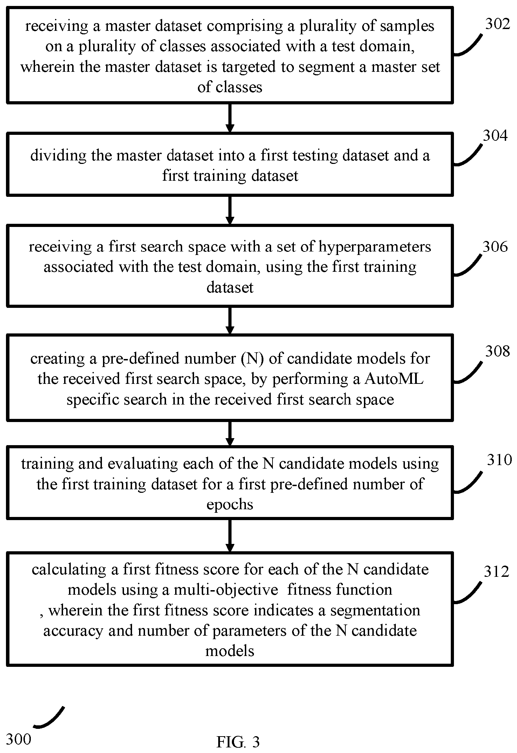

At step 202 of the method 200, the system 100 performs, via the one or more hardware processors 102, a first stage training. The first stage training involves iteratively performing, till a search converges, steps in method 300 in FIG. 3, which are explained hereafter. In various embodiments, the system 100 may determine that the search has converged, after a pre-defined number of iterations, or when the first fitness score does not improve anymore.

At step 302 of the method 300, the system 100 receives a master dataset comprising a plurality of samples on a plurality of classes associated with a test domain. The master dataset is targeted to segment a master set of classes. Further, at step 304 of the method 300, the system 100 divides the master dataset into a first testing dataset and a first training dataset. In an embodiment, the division into the first testing dataset and the first training dataset is random. In another embodiment, the division may involve creating two copies of datasets from the master dataset, wherein one copy is used as the training dataset and the other copy is used as the testing dataset.

Further, at step 306 of the method 300, the system 100 receives a first search space with a set of hyperparameters associated with the test domain, using the first training dataset. The search space is curated such that the set of hyperparameters forming the first search space are most relevant from a domain and application point of view. For example, if the test domain is precision agriculture, and the purpose/intent is crop and weed segmentation, the first search space is defined/selected in such a way that all hyperparameters selected for curating the search space suit the purpose/intent is crop and weed segmentation. The hyperparameters include primary constituents of a segmentation-friendly Deep Neural Network (DNN) model, e.g. encoder/decoder blocks, number of layers, filter sizes, learning rates, and dropout rates.

Further, at step 308 of the method 300, the system 100 creates a pre-defined number (N) of candidate models for the received first search space, by performing a AutoML specific search in the received first search space. For the AutoML specific search, the first training dataset, the first search space, and a multi-objective fitness function are used as input and a deep neural network model is created as one of the N candidate models. Likewise, the N candidate models are created. Value of N maybe pre-defined or dynamically defined. Across the N candidate models, values of hyperparameters such as number of layers, filter sizes, learning rates, and dropout rates may vary.

Further, at step 310 of the method 300, the system 100 trains each of the N candidate models using the first training dataset for a first pre-defined number of epochs. Value of the first pre-defined number of epochs may be pre-defined or dynamically defined. Further, each of the N candidate models is evaluated for a selected set of metrics. For example, the metrics used for evaluation may include, but not limited to, segmentation accuracy and number of parameters.

Further, at step 312 of the method 300, the system 100 calculates a first fitness score for each of the N candidate models using a multi-objective fitness function represented as $p = \alpha \cdot mIoU + \gamma \cdot \frac{1}{P}$. In the multi-objective fitness function, $\alpha$ and $\gamma$ are linear interpolation coefficients that assign weightage to each objective of a plurality of objectives forming the multi-objective fitness function. The first fitness score indicates a segmentation accuracy and number of parameters of the N candidate models. Each of the N candidate models, that is a Deep Neural Network model, has layers and parameters within the model. More the layers and parameters, more space is needed in memory to store those. Also more calculations (multiply and accumulate) needed when parameters are more. Which means, more the number of parameters, larger and power consuming the model is. The N candidate models and the associated fitness scores are output of the first stage training.

Referring back to the method 200, at step 204, the system 100 selects, via the one or more hardware processors 102, one candidate model from among the N candidate models, based on the first fitness score, wherein the selected candidate model is a multi-class segmentation model forming a master ML segmentation model. At this step, the system 100 selects the candidate model having highest value of the first fitness score, from among the N candidate models, as the highest value of the first fitness score indicates that the model has highest segmentation accuracy and lower number of parameters, thus making the candidate model more suitable for intended application. In an embodiment, the selection of the one candidate model from among the N candidate models is represented in terms of a Roulette wheel selection,

$$f_i : \mathcal{P}_i = \frac{f_i}{\sum_{j=1}^{N} f_j}$$

probability $\mathcal{P}_i$ of selecting a model $i$ is proportional to the fitness score .

Further, at step 206 of the method 200, the system 100 receives a set of task-specific datasets, via the one or more hardware processors 102. The task-specific datasets comprise a pre-defined number of samples for training one or more of the N candidate models. In various embodiments, the training one of a single class segmentation problem and a few-class segmentation problem.

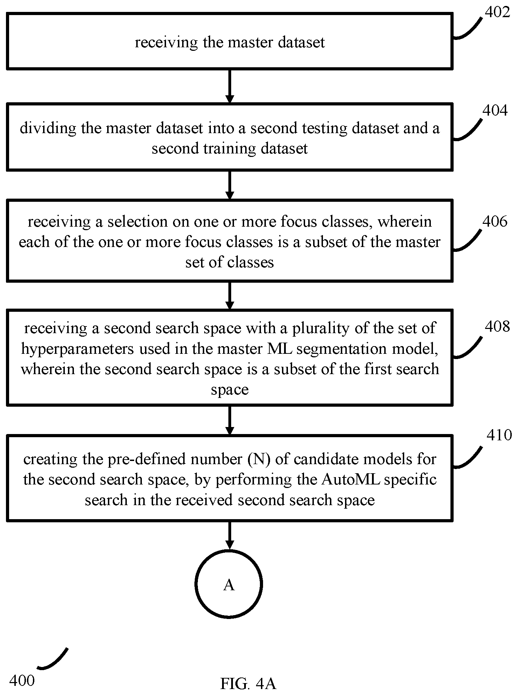

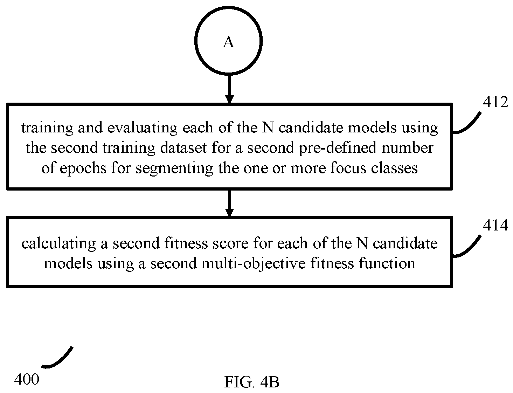

Further, at step 208 of the method 200, the system 100 performs, for each of the task-specific datasets, via the one or more hardware processors 102, a second stage training. Various steps involved in the second stage training are depicted in method 400 in FIGS. 4A and 4B and are explained hereafter. These steps are iteratively performed till a search converges. In various embodiments, the system 100 may determine that the search has converged, after a pre-defined number of iterations, or when the second fitness score does not improve anymore.

At step 402 of the method 400, the system 100 receives the master dataset for the second stage training. At step 404, the system 100 divides the received master dataset into a second testing dataset and a second training dataset. In an embodiment, the division into the second testing dataset and the second training dataset is random. In another embodiment, the division may involve creating two copies of datasets from the master dataset, wherein one copy is used as the training dataset and the other copy is used as the testing dataset.

Further, at step 406 of the method 400, the system 100 receives a selection on one or more focus classes. Each of the one or more focus classes is a subset of the master set of classes. For example, the master dataset in the precision agriculture domain may contain details on a variety of crops. However, in an actual scenario, only a selected variety of crops may have to be focused on, which form the one or more focus classes.

Further at step 408 of the method 400, the system 100 receives a second search space with a plurality of the set of hyperparameters used in the master ML segmentation model. The second search space is a subset of the first search space. As compared to the first stage search, the second stage search is required to process comparatively less data, hence, only those hyperparameters that match the data in the one or more focus classes is selected to form the second search space.

Further, at step 410 of the method 400, the system 100 creates the pre-defined number (N) of candidate models for the second search space, by performing the AutoML specific search in the received second search space. For the AutoML specific search, the second training dataset, the second search space, and a multi-objective fitness function are used as input and a deep neural network model is created as one of the N candidate models. Likewise, the N candidate models are created. Value of N maybe pre-defined or dynamically defined. Across the N candidate models, values of hyperparameters such as number of layers, filter sizes, learning rates, and dropout rates may vary.

Further, at step 412 of the method 400, the system 100 trains and evaluates each of the N candidate models using the second training dataset for a second pre-defined number of epochs, for segmenting the one or more focus classes. Value of the second pre-defined number of epochs may be pre-defined or dynamically defined. Further, each of the N candidate models is evaluated for a selected set of metrics. For example, the metrics used for evaluation may include, but not limited to, segmentation accuracy and number of parameters.

Further, at step 414 of the method 400, the system 100 calculates a second fitness score for each of the N candidate models using a second multi-objective fitness function represented as,

$$p = \alpha . mIoU + (\beta_1 . tIoU_1 + \beta_2 . tIoU_2 + \cdots .. + \beta_m . tIoU_m) + \gamma . \frac{1}{P}$$

Here, $\alpha$, $\beta$, and $\gamma$ are the linear interpolation coefficients that assign weightage to each objective of a plurality of objectives forming the second multi-objective fitness function. $\alpha$ controls overall segmentation accuracy, i.e., mean Intersection over Union (IoU) score across all classes (mIoU). $\beta$ controls weightage of $tIoU_1$, $tIoU_2$, .... $tIoU_m$, where there are m target classes out of total n classes, and $tIoU_k$ is IoU score for $k^{th}$ target class. $\gamma$ controls number of parameters in the model (P). Values of $\alpha$, $\beta$, and $\gamma$ are normalized by respective min-max values to ensure a balanced evaluation. Setting one of the coefficients to zero ensures that corresponding objective is not considered in search. Values of the coefficients are selected such that $\alpha + \beta + \gamma = 1$.

Referring back to method 200, at step 210, the system 100 selects, via the one or more hardware processors 102, one candidate model from among the N candidate models, based on the second fitness score. The selected candidate model is a few class focused compact model, forming a class focused segmentation model. In an embodiment, the system 100 selects the candidate model having highest value of the second fitness score, wherein the highest value of the second fitness score indicates that the candidate model has highest value of segmentation accuracy and number of parameters, from among the N candidate models.

Further, at step 212 of the method 200, the system 100 fine-tunes, via the one or more hardware processors 102, the class focused segmentation model to the set of task-specific datasets, to generate a fine-tuned task specific segmentation model. The fine-tuned task specific segmentation model is used for class segmentation of at least the first testing dataset and the second testing dataset.

By using this approach, 1) the generated model is fine-tuned to generate predictions for specific classes, and 2) the generated model is compact as it is trained on task specific data and on a reduced search space, hence maybe deployed on devices such as edge devices, having low memory.

Experimental Data:-

The CropAndWeeddataset used in the experiments address the critical need for high-quality, diverse training data in the domain of precision agriculture. This dataset included a large-scale collection of high-resolution images capturing 74 crop and weed species in various environmental conditions. Several dataset variants were explored to tailor the data for specific application requirements: Fine24, which maps the original labels into 24 detailed crop and weed classes; CropsOrWeed9, which combines all weeds into a single class while maintaining distinct crop classes; Crop2, which groups all crops into one class and all weeds into another; and Crop1, which focuses on identifying a single crop class against all other plants.

To establish a benchmark for the applicability of the used dataset in different scenarios, training was conducted on Fine24 variant and test across Fine24, Crop2, Crop1, and CropsOrWeed9 variants for multiple learning tasks and evaluated their results based on established metrics. The test set representing 15% of all images was completely independent of the training and validation data for all experiments on the Fine24 variant of the dataset.

The results are presented below.

1. Accurate and compact models: Firstly, it is shown how a parameter-wise compact model can be generated keeping the segmentation accuracy high by using the proposed architecture search. In precision agriculture, there is no focus so far for automated generation of compact models.

2. Focused models: Secondly, it is shown that the method 200 guarantees high overall segmentation accuracy, but it has no handles on the accuracy values for individual crops (or weeds). Two case studies are presented, where (a) one set of fields needs high accuracy on potato and pumpkin, and (b) another set of fields needs high accuracy on sugar beet and soy.

3. Wider applicability: Finally, it is shown that the method 200 can be applied to other precision agriculture datasets.

Note that the searching and training only happen on the Fine24 dataset, as it is the superset of the other three tasks (datasets). The evaluation results are presented for all four tasks.

Evaluation Results:-

The models generated by the fitness function configuration are depicted in Table 1, where the hyperparameters were: $\alpha = 0.75$, $\beta1 = \beta2 = 0$ and $\gamma = 0.25$. The other configuration, where the number of parameters are equally priorited with accuracy, is reported in Table 2.

Two major inferences could be drawn from the results. 1. The average segmentation accuracy (mIoU) was always better for the auto- generated models, than the baseline, state-of-the-art model (DLA-34). Moreover, the parameter sizes are also much smaller, highlighting the efficacy and utility of the search process. For instance, the auto-generated UNET3-GA models have better segmentation accuracy (mIoU) for all four tasks than baseline DLA-34 model, having almost 16× lesser parameters. This makes it possible to deploy on-board Crop and Weed segmentation on resource limited devices. 2. There is no guarantee which individual vegetation be segmented with high accuracy, and which one will be poorly segmented. For instance, in Table. 1 the accuracy of Soy increases by almost 37% in the generated UNET5-GA variant, over the baseline DLA-34 model. However, the accuracy of Potato decreased by 8%. The second point underlines the need for a search process that can guarantee of optimal segmentation accuracy of a few chosen plants, along with a high overall accuracy and compactness.

| Fine24# | | Dataset |
|---|---|---|
| 83.1 | mIoU | UNET5-GA |
| 69.4 | SB | |
| 71.5 | Soy | Params - 3.4M |
| 88.2 | PMK | |
| 64.1 | POT | |
| 71.8 | mIoU | UNET3-GA |
| 79.3 | SB | |
| 69.7 | Soy | Params - 1.1 M |
| 82.3 | PMK | |
| 66.3 | POT | |
| 71.6 | mIoU | DLA-34 |
| 79.0 | SB | Params - 16.7 M |
| 53.9 | Soy | |
| 89.2 | PMK | |
| 70.8 | POT | |

| Crop1 | Crop2 | CorW9 |
|---|---|---|
| 75.2 | 84.5 | 85.3 |
| 70.8 | 81.9 | 72.1 |
| 79.3 | 78.6 | 79.7 |
| 81.5 | 85.2 | 83.7 |
| 41.6 | 65.7 | 71.2 |
| 59.4 | 74.1 | 72.8 |
| 74.2 | 80.4 | 81.4 |
| 55.4 | 57.8 | 65.9 |
| 70.1 | 83.3 | 85.2 |
| 21.1 | 60.5 | 70.1 |
| 57.2 | 73.1 | 71.5 |
| 74.4 | 79.5 | 81.1 |
| 52.8 | 54.1 | 55.0 |
| 74.3 | 87.5 | 88.7 |
| 21.2 | 65.4 | 74.6 |

Table. 2

| Crop1 | Crop2 | CorW9 | Fine24# | | Dataset |
|---|---|---|---|---|---|
| 82.7 | 94.5 | 93.3 | 94.5 | mIoU | UNET5-GA |
| 71.8 | 83.9 | 75.1 | 72.3 | SB | |
| 89.4 | 85.6 | 89.8 | 91.5 | Soy | Params - 5.2M |
| 94.5 | 96.1 | 96.9 | 96.1 | PMK | |
| 34.5 | 64.2 | 64.2 | 62.6 | POT | |
| 59.2 | 81.2 | 82.5 | 81.4 | mIoU | UNET3-GA |
| 72.8 | 80.6 | 81.7 | 80.8 | SB | |
| 51.2 | 55.9 | 58.1 | 53.1 | Soy | Params - 1.9 M |
| 76.3 | 85.1 | 86.5 | 85.3 | PMK | |
| 21.7 | 66.5 | 75.1 | 75.3 | POT | |
| 57.2 | 73.1 | 71.5 | 71.6 | mIoU | DLA-34 |
| 74.4 | 79.5 | 81.1 | 79.0 | SB | Params - 16.7 M |
| 52.8 | 54.1 | 55.0 | 53.9 | Soy | |
| 74.3 | 87.8 | 88.7 | 89.2 | PMK | |
| 21.2 | 65.4 | 74.6 | 70.8 | POT | |

In Tables 1 and 2:- Comparison between segmentation accuracy (mIoU) vs. number of parameters. Abbreviations used: {SB: Sugar beet, PMK: Pumpkin, POT: Potato, CorW9: CropsOrWeed9}. DLA-34 is the state of the art model [32]. UNET5-GA and UNET3- GA models generated by proposed search. Mean IoU is calculated across all classes in each dataset. # The Fine24 dataset is used for training / search. The other three datasets are subsets of Fine24, hence the model is only evaluated on those.

Focused Models:

Models were generated with two pairs of focused crops, i.e., (1) Pumpkin and Potato, and (2) Sugar beet and Soy. Results with two different fitness function configurations were observed. The salient observations are: 1. The average segmentation accuracy (mIoU) for the auto-generated models were still better than the baseline (DLA-34), even if focus is on two different crops. Thus, focusing on specific plants does not mar the proposed search's capability to generate overall accurate but compact model. 2. With 5× less parameters, the UNET5-GA model got more than 10% accuracy improvement for potato. With some more focus on the accuracy that improvement is more than 20% for the UNET5-GA model, having 5× less parameters that DLA-34. Similar improvements are also observed across all the configurations. 3. The method 200 demonstrated the capability to generate models within the range of 1.1M to approximately 6M parameters by modifying the fitness function, which was essential for accommodating the diverse memory constraints of various edge devices. The smallest model can be achieved by setting y to 0.50. For a specific dataset, the $\alpha$, $\beta1$, and $\beta2$ were fine-tuned for optimal performance. Once trained, this model could be applied to any two focused (pumpkin-potato and sugarbeet-soy) classes across the dataset. Through the experiments, the following values were tuned: $\alpha = 0.10$ and $\beta1 = \beta2 = 0.20$ for any two classes, as an example (pumpkin-potato focused). After finalizing $\alpha$, $\beta1$, and $\beta2$ optimal model was finalized by genetic algorithm through the optimal fitness function for both UNET3-GA and UNET5-GA. This approach was applied to the fine24 dataset while training and got better results across all datasets and focused classes.

For better segmentation IoU model, setting y to 0.25 allowed more importance to segmentation performance which led to an equal distribution of $\alpha$, $\beta1$ and $\beta2$ at 0.25 each, eliminating the need for additional parameter tuning.

The written description describes the subject matter herein to enable any person skilled in the art to make and use the embodiments. The scope of the subject matter embodiments is defined by the claims and may include other modifications that occur to those skilled in the art. Such other modifications are intended to be within the scope of the claims if they have similar elements that do not differ from the literal language of the claims or if they include equivalent elements with insubstantial differences from the literal language of the claims.

The embodiments of present disclosure herein address unresolved problem of model size optimization to generate compact models. The embodiment, thus provides a two stage model training approach that facilitates generation of class focused ML segmentation models. Moreover, the embodiments herein further provide a mechanism for class segmentation of data, using the class focused ML segmentation models that is fine-tuned using task specific datasets.

It is to be understood that the scope of the protection is extended to such a program and in addition to a computer-readable means having a message therein; such computer-readable storage means contain program-code means for implementation of one or more steps of the method, when the program runs on a server or mobile device or any suitable programmable device. The hardware device can be any kind of device which can be programmed including e.g., any kind of computer like a server or a personal computer, or the like, or any combination thereof. The device may also include means which could be e.g., hardware means like e.g., an application-specific integrated circuit (ASIC), a field-programmable gate array (FPGA), or a combination of hardware and software means, e.g., an ASIC and an FPGA, or at least one microprocessor and at least one memory with software processing components located therein. Thus, the means can include both hardware means and software means. The method embodiments described herein could be implemented in hardware and software. The device may also include software means. Alternatively, the embodiments may be implemented on different hardware devices, e.g., using a plurality of CPUs.

The embodiments herein can comprise hardware and software elements. The embodiments that are implemented in software include but are not limited to, firmware, resident software, microcode, etc. The functions performed by various components described herein may be implemented in other components or combinations of other components. For the purposes of this description, a computer-usable or computer readable medium can be any apparatus that can comprise, store, communicate, propagate, or transport the program for use by or in connection with the instruction execution system, apparatus, or device.

The illustrated steps are set out to explain the exemplary embodiments shown, and it should be anticipated that ongoing technological development will change the manner in which particular functions are performed. These examples are presented herein for purposes of illustration, and not limitation. Further, the boundaries of the functional building blocks have been arbitrarily defined herein for the convenience of the description. Alternative boundaries can be defined so long as the specified functions and relationships thereof are appropriately performed. Alternatives (including equivalents, extensions, variations, deviations, etc., of those described herein) will be apparent to persons skilled in the relevant art(s) based on the teachings contained herein. Such alternatives fall within the scope of the disclosed embodiments. Also, the words "comprising," "having," "containing," and "including," and other similar forms are intended to be equivalent in meaning and be open ended in that an item or items following any one of these words is not meant to be an exhaustive listing of such item or items, or meant to be limited to only the listed item or items. It must also be noted that as used herein and in the appended claims, the singular forms "a," "an," and "the" include plural references unless the context clearly dictates otherwise.

Furthermore, one or more computer-readable storage media may be utilized in implementing embodiments consistent with the present disclosure. A computer-readable storage medium refers to any type of physical memory on which information or data readable by a processor may be stored. Thus, a computer-readable storage medium may store instructions for execution by one or more processors, including instructions for causing the processor(s) to perform steps or stages consistent with the embodiments described herein. The term "computer-readable medium" should be understood to include tangible items and exclude carrier waves and transient signals, i.e., be non-transitory. Examples include random access memory (RAM), read-only memory (ROM), volatile memory, nonvolatile memory, hard drives, CD ROMs, DVDs, flash drives, disks, and any other known physical storage media.

It is intended that the disclosure and examples be considered as exemplary only, with a true scope of disclosed embodiments being indicated by the following claims.

## Claims

1. A processor implemented method (200), comprising:
   performing (202), via one or more hardware processors, a first stage training, comprising, iteratively performing, till a search converges:

   receiving (302) a master dataset comprising a plurality of samples on a plurality of classes associated with a test domain, wherein the master dataset is targeted to segment a master set of classes;
   dividing (304) the master dataset into a first testing dataset and a first training dataset;
   receiving (306) a first search space with a set of hyperparameters associated with the test domain, using the first training dataset;
   creating (308) a pre-defined number (N) of candidate models for the received first search space, by performing a AutoML specific search in the received first search space;
   training (310) and evaluating each of the N candidate models using the first training dataset for a first pre-defined number of epochs; and
   calculating (312) a first fitness score for each of the N candidate models using a multi-objective fitness function

represented as $p = \alpha \cdot mIoU + \gamma \cdot \frac{1}{P}$ , where, $\alpha$ and $\gamma$ are linear interpolation coefficients that assign weightage to each objective of a plurality of objectives forming the multi-objective fitness function, and wherein the first fitness score indicates a segmentation accuracy and number of parameters of the N candidate models;

selecting (204), via the one or more hardware processors, one candidate model from among the N candidate models, based on the first fitness score, wherein the selected candidate model is a multi-class segmentation model forming a master ML segmentation model;

receiving (206) a set of task-specific datasets, via the one or more hardware processors, wherein the task-specific datasets comprise a pre-defined number of samples for training one of a single class segmentation problem and a few-class segmentation problem;

performing (208), for each of the task-specific datasets, via the one or more hardware processors, a second stage training, comprising, iteratively performing, till a search converges:

receiving (402) the master dataset;

dividing (404) the received master dataset into a second testing dataset and a second training dataset;

receiving (406) a selection on one or more focus classes, wherein each of the one or more focus classes is a subset of the master set of classes;

receiving (408) a second search space with a plurality of the set of hyperparameters used in the master ML segmentation model, wherein the second search space is a subset of the first search space;

creating (410) the pre-defined number (N) of candidate models for the second search space, by performing the AutoML specific search in the received second search space;

training and evaluating (412) each of the N candidate models using the second training dataset for a second pre-defined number of epochs for segmenting the one or more focus classes; and

calculating (414) a second fitness score for each of the N candidate models using a second multi-objective fitness function represented as

$$p = \alpha \cdot mIoU + (\beta_1 \cdot tIoU_1 + \beta_2 \cdot tIoU_2 + \cdots + \beta_m \cdot tIoU_m)$$
$$+ \gamma \cdot \frac{1}{P}$$

,where, $\alpha$, $\beta$, and $\gamma$ are the linear interpolation coefficients that assign weightage to each objective of a plurality of objectives forming the second multi-objective fitness function;

selecting (210), via the one or more hardware processors, one candidate model from among the N candidate models, based on the second fitness score, wherein the selected candidate model is a few class focused compact model, forming a class focused segmentation model; and

fine-tuning (212), via the one or more hardware processors, the class focused segmentation model to the set of task-specific datasets, to generate a fine-tuned task specific segmentation model.

2. The processor implemented method (200) as claimed in claim 1, wherein the fine-tuned task specific segmentation model is used for class segmentation of a task specific data set from at least one of the first testing dataset and the second testing dataset.

3. A system (100), comprising:

one or more hardware processors (102);
a communication interface (112); and
a memory (104) storing a plurality of instructions, wherein the plurality of instructions cause the one or more hardware processors to:

perform a first stage training, comprising, iteratively performing, till a search converges:

receive a master dataset comprising a plurality of samples on a plurality of classes associated with a test domain, wherein the master dataset is targeted to segment a master set of classes;
divide the master dataset into a first testing dataset and a first training dataset;
receive a first search space with a set of hyperparameters associated with the test domain, using the first training dataset;

create a pre-defined number (N) of candidate models for the received first search space, by performing a AutoML specific search in the received first search space;

train and evaluating each of the N candidate models using the first training dataset for a first pre-defined number of epochs; and

calculate a first fitness score for each of the N candidate models using a multi-objective fitness function represented as

$$p = \alpha \cdot mIoU + \gamma \cdot \frac{1}{P}$$

, where, $\alpha$ and $\gamma$ are linear interpolation coefficients that assign weightage to each objective of a plurality of objectives forming the multi-objective fitness function, wherein the first fitness score indicates a segmentation accuracy and number of parameters of the N candidate models;

selecting, via the one or more hardware processors, one candidate model from among the N candidate models, based on the first fitness score, wherein the selected candidate model is a multi-class segmentation model forming a master ML segmentation model;

receiving a set of task-specific datasets, via the one or more hardware processors, wherein the task-specific datasets comprise a pre-defined number of samples for training one of a single class segmentation problem and a few-class segmentation problem;

performing, for each of the task-specific datasets, via the one or more hardware processors, a second stage training, comprising, iteratively performing, till a search converges:

receiving the master dataset;

dividing the received master dataset into a second testing dataset and a second training dataset;

receiving a selection on one or more focus classes, wherein each of the one or more focus classes is a subset of the master set of classes;

receiving a second search space with a plurality of the set of hyperparameters used in the master ML segmentation model, wherein the second search space is a subset of the first search space;

creating the pre-defined number (N) of candidate models for the second search space, by performing the AutoML specific search in the received second search space;

training and evaluating each of the N candidate models using the second training dataset for a second pre-defined number of epochs for segmenting the one or more focus classes; and

calculating a second fitness score for each of the N candidate models using a second multi-objective fitness function represented as

$$p = \alpha \cdot mIoU + (\beta_1 \cdot tIoU_1 + \beta_2 \cdot tIoU_2 + \cdots.. + \beta_m \cdot tIoU_m)$$
$$+ \gamma \cdot \frac{1}{P}$$

where, $\alpha$, $\beta$, and $\gamma$ are the linear interpolation coefficients that assign weightage to each objective of a plurality of objectives forming the second multi-objective fitness function;

select one candidate model from among the N candidate models, based on the second fitness score, wherein the selected candidate model is a few class focused compact model, forming a class focused segmentation model; and

fine-tune the class focused segmentation model to the set of task-specific datasets, to generate a fine-tuned task specific segmentation model.

4. The system as claimed in claim 3, wherein the fine-tuned task specific segmentation model is used for class segmentation of a task specific data set from at least one of the first testing dataset and the second testing dataset.

5. One or more non-transitory machine-readable information storage mediums comprising one or more instructions which when executed by one or more hardware processors cause:

performing a first stage training, comprising, iteratively performing, till a search converges:

receiving a master dataset comprising a plurality of samples on a plurality of classes associated with a test domain, wherein the master dataset is targeted to segment a master set of classes;

dividing the master dataset into a first testing dataset and a first training dataset;

receiving a first search space with a set of hyperparameters associated with the test domain, using the first training dataset;

creating a pre-defined number (N) of candidate models for the received first search space, by performing a AutoML specific search in the received first search space;

training and evaluating each of the N candidate models using the first training dataset for a first pre-defined number of epochs; and

calculating a first fitness score for each of the N candidate models using a multi-objective fitness function represented as $p = \alpha \cdot mIoU + \gamma \cdot \frac{1}{P}$ , where, $\alpha$ and $\gamma$ are linear interpolation coefficients that assign weightage to each objective of a plurality of objectives forming the multi-objective fitness function, and wherein the first fitness score indicates a segmentation accuracy and number of parameters of the N candidate models;

selecting one candidate model from among the N candidate models, based on the first fitness score, wherein the selected candidate model is a multi-class segmentation model forming a master ML segmentation model;

receiving a set of task-specific datasets, via the one or more hardware processors, wherein the task-specific datasets comprise a pre-defined number of samples for training one of a single class segmentation problem and a few-class segmentation problem;

performing for each of the task-specific datasets, via the one or more hardware processors, a second stage training, comprising, iteratively performing, till a search converges:

receiving the master dataset;

dividing the received master dataset into a second testing dataset and a second training dataset;

receiving a selection on one or more focus classes, wherein each of the one or more focus classes is a subset of the master set of classes;

receiving a second search space with a plurality of the set of hyperparameters used in the master ML segmentation model, wherein the second search space is a subset of the first search space;

creating the pre-defined number (N) of candidate models for the second search space, by performing the AutoML specific search in the received second search space;

training and evaluating each of the N candidate models using the second training dataset for a second pre-defined number of epochs for segmenting the one or more focus classes; and

calculating a second fitness score for each of the N candidate models using a second multi-objective fitness function represented as

$$p = \alpha \cdot mIoU + (\beta_1 . tIoU_1 + \beta_2 . tIoU_2 + \cdots .. + \beta_m . tIoU_m)$$

$$+ \gamma \cdot \frac{1}{P}$$

,where, $\alpha, \beta,$ and $\gamma$ are the linear interpolation coefficients that assign weightage to each objective of a plurality of objectives forming the second multi-objective fitness function;

selecting one candidate model from among the N candidate models, based on the second fitness score, wherein the selected candidate model is a few class focused compact model, forming a class focused segmentation model; and

fine-tuning the class focused segmentation model to the set of task-specific datasets, to generate a fine-tuned task specific segmentation model.

6. The one or more non-transitory machine readable information storage mediums as claimed in claim 5, wherein the fine-tuned task specific segmentation model is used for class segmentation of a task specific data set from at least one of the first testing dataset and the second testing dataset.

100

FIG. 1

performing, via one or more hardware processors, a first stage training to create N candidate models and associated first fitness scores

202

selecting, via the one or more hardware processors, one candidate model from among the N candidate models, based on the first fitness score, wherein the selected candidate model is a multi-class segmentation model forming a master ML segmentation model

204

receiving a set of task-specific datasets, via the one or more hardware processors, wherein the task-specific datasets comprise a pre-defined number of samples for training one of a single class segmentation problem and a few-class segmentation problem

206

performing, for each of the task-specific datasets, via the one or more hardware processors, a second stage training, to create N candidate models and associated second fitness scores

208

selecting, via the one or more hardware processors, one candidate model from among the N candidate models, based on the second fitness score, wherein the selected candidate model is a few class focused compact model, forming a class focused segmentation model

210

fine-tuning, via the one or more hardware processors, the class focused segmentation model to the set of task-specific datasets, to generate a fine-tuned task specific segmentation model

212

200

FIG. 2

receiving a master dataset comprising a plurality of samples on a plurality of classes associated with a test domain, wherein the master dataset is targeted to segment a master set of classes — 302

dividing the master dataset into a first testing dataset and a first training dataset — 304

receiving a first search space with a set of hyperparameters associated with the test domain, using the first training dataset — 306

creating a pre-defined number (N) of candidate models for the received first search space, by performing a AutoML specific search in the received first search space — 308

training and evaluating each of the N candidate models using the first training dataset for a first pre-defined number of epochs — 310

calculating a first fitness score for each of the N candidate models using a multi-objective fitness function , wherein the first fitness score indicates a segmentation accuracy and number of parameters of the N candidate models — 312

300

FIG. 3

```
┌─────────────────────────────────────────────┐
│                                             │  402
│        receiving the master dataset         │
│                                             │
└─────────────────────────────────────────────┘
                     │
                     ▼
┌─────────────────────────────────────────────┐
│  dividing the master dataset into a second  │  404
│   testing dataset and a second training     │
│                 dataset                     │
└─────────────────────────────────────────────┘
                     │
                     ▼
┌─────────────────────────────────────────────┐
│  receiving a selection on one or more focus │  406
│  classes, wherein each of the one or more   │
│  focus classes is a subset of the master    │
│               set of classes                │
└─────────────────────────────────────────────┘
                     │
                     ▼
┌─────────────────────────────────────────────┐
│  receiving a second search space with a     │  408
│  plurality of the set of hyperparameters    │
│  used in the master ML segmentation model,  │
│  wherein the second search space is a       │
│  subset of the first search space           │
└─────────────────────────────────────────────┘
                     │
                     ▼
┌─────────────────────────────────────────────┐
│  creating the pre-defined number (N) of     │  410
│  candidate models for the second search     │
│  space, by performing the AutoML specific   │
│  search in the received second search space │
└─────────────────────────────────────────────┘
                     │
                     ▼
                   ( A )
```

400

FIG. 4A

A

training and evaluating each of the N candidate models using the second training dataset for a second pre-defined number of epochs for segmenting the one or more focus classes 412

calculating a second fitness score for each of the N candidate models using a second multi-objective fitness function 414

400

FIG. 4B

**EP 4 703 973 A1**

<table>
<tr><td colspan="5" align="center">**EUROPEAN SEARCH REPORT**</td><td>**Application Number**<br>EP 25 18 4358</td></tr>
</table>

## DOCUMENTS CONSIDERED TO BE RELEVANT

| Category | Citation of document with indication, where appropriate, of relevant passages | Relevant to claim | CLASSIFICATION OF THE APPLICATION (IPC) |
|---|---|---|---|
| X | EP 4 261 749 A1 (TATA CONSULTANCY SERVICES LTD [IN]) 18 October 2023 (2023-10-18)<br>* paragraph [0030] - paragraph [0031]; claims 1, 2 *<br>* paragraph [0044] *<br>----- | 1-6 | INV.<br>G06N3/082<br>G06N3/086<br>G06N3/0985 |
| A | STEININGER DANIEL ET AL: "The CropAndWeed Dataset: a Multi-Modal Learning Approach for Efficient Crop and Weed Manipulation", 2023 IEEE/CVF WINTER CONFERENCE ON APPLICATIONS OF COMPUTER VISION (WACV), IEEE,<br>2 January 2023 (2023-01-02), pages 3718-3727, XP034290770,<br>DOI: 10.1109/WACV56688.2023.00372<br>[retrieved on 2023-02-06]<br>* section 5.2 *<br>----- | 1-6 | |

**TECHNICAL FIELDS SEARCHED (IPC)**

G06N

The present search report has been drawn up for all claims

| Place of search | Date of completion of the search | Examiner |
|---|---|---|
| The Hague | 6 November 2025 | Tidriri, Khaoula |

EPO FORM 1503 03.82 (P04C01)

**EP 4 703 973 A1**

## ANNEX TO THE EUROPEAN SEARCH REPORT
## ON EUROPEAN PATENT APPLICATION NO.

EP 25 18 4358

This annex lists the patent family members relating to the patent documents cited in the above-mentioned European search report.
The members are as contained in the European Patent Office EDP file on
The European Patent Office is in no way liable for these particulars which are merely given for the purpose of information.

06-11-2025

| Patent document cited in search report | Publication date | Patent family member(s) | Publication date |
|---|---|---|---|
| EP 4261749 A1 | 18-10-2023 | EP 4261749 A1 | 18-10-2023 |
| | | US 2023334330 A1 | 19-10-2023 |

EPO FORM P0459

For more details about this annex : see Official Journal of the European Patent Office, No. 12/82

## EP 4 703 973 A1

**Patent documents cited in the description**

- IN 202421065793